# EUROPEAN PATENT APPLICATION

(11) **EP 2 843 307 A1**
(43) Date of publication of application: **04.03.2015**
(21) Application number: 13841189.7
(22) Date of filing: 21.08.2013
(51) Int. Cl.: F23D 11/44, F01N 3/025, F23D 11/40

(54) **BURNER**

(30) Priority: 28.09.2012 JP 2012215528
(71) Applicant: Hino Motors, Ltd., Hino-shi, Tokyo 191-8660 (JP)
(72) Inventor: SHIBUYA, Ryo, Hino-shi Tokyo 191-8660 (JP); TSUMAGARI, Ichiro, Hino-shi Tokyo 191-8660 (JP)
(74) Representative: Tranter, Andrew David
(86) International application number: PCT/JP2013/072298
(87) International publication number: WO 2014/050375

(57) **Abstract**

A burner includes a partition wall (49) that partitions a mixing chamber (47), which generates an air-fuel mixture, and a combustion chamber (48), which burns the air-fuel mixture. The partition wall (49) includes a plurality of communication passages 50 that communicate the mixing chamber (47) with the combustion chamber (48). Further, a heating unit (59) that heats the partition wall (49) is attached to the partition wall (49). Such a structure heats the partition wall (49) and a mesh (51) with the heating unit (59) and burns particulate matter deposited on the partition wall (49) and the mesh (51).

## Description

### TECHNICAL FIELD

The technology of the present disclosure relates to a burner including a partition wall that partitions a mixing chamber and a combustion chamber.

### BACKGROUND ART

In the prior art, an exhaust gas passage for a diesel engine includes an exhaust purifying device that purifies the exhaust gas. The exhaust gas purifying device includes a diesel particulate filter (DPF) that removes, for example, particulate matter (PM) from the exhaust gas. To sustain the particulate matter capturing performance, the DPF undergoes a regeneration process that burns particulate matter captured in the DPF.

The regeneration process is performed by activating a burner located in front of the DPF. During the regeneration process, the burner supplies the exhaust gas passage with combustion gas that is generated in a combustion chamber of the burner. The exhaust gas, which is heated by the combustion gas, flows through the DPF and burns the particulate matter captured in the DPF (refer to, for example, patent document 1).

A premixing type burner is known as such a burner that reduces the unburned fuel in the combustion gas by supplying the mixture of air and fuel to the combustion chamber instead of separately supplying air and fuel to the combustion chamber. In the premixing type burner, the premixing chamber is divided from the combustion chamber with a partition wall. The air-fuel mixture generated in the premixing chamber flows into the combustion chamber through communication chambers formed by the partition wall.

### PRIOR ART DOCUMENT

### PATENT DOCUMENT

Patent Document 1: Japanese Laid-Open Patent Publication No. 2011-185493

### SUMMARY OF THE INVENTION

### PROBLEMS THAT ARE TO BE SOLVED BY THE INVENTION

When the burner is deactivated, some of the exhaust gas flowing through the exhaust gas passage flows into the combustion chamber. Thus, the particulate matter in the exhaust gas deposits on the partition wall. This changes the distribution and flow rate of the mixture in the combustion chamber in the next combustion and may consequently lower the ignition performance of the air-fuel mixture in the combustion chamber. This problem occurs not only when the particulate matter in the exhaust gas deposits on the partition wall but also when the particulate matter included in the combustion chamber deposits on the partition wall.

It is an object of the technology of the present disclosure to provide a burner that limits degradation in the ignitability of the air-fuel mixture.

### MEANS FOR SOLVING THE PROBLEM

One aspect of the present disclosure is a burner including a partition wall with which a mixing chamber is divided from a combustion chamber. The mixing chamber generates an air-fuel mixture, and the combustion chamber burns the air-fuel mixture. A plurality of communication passages are formed by the partition wall to communicate the mixing chamber with the combustion chamber, and a heating unit heats the partition wall.

In the burner according to the one aspect of the present disclosure, the partition wall is heated by the heating unit. Thus, in comparison to a structure that does not heat the partition wall, deposits are more easily removed from the partition wall. This limits degradation in the ignitability of the air-fuel mixture caused by deposits on the partition wall.

A further aspect of the present disclosure is a burner provided with a combustion tube including a distal end defining an injection port that injects combustion gas, which is the burned air-fuel mixture. A first inner tube extends through the combustion tube toward the injection port. The air-fuel mixture flows into the first inner tube from a side opposite to the injection port. A second inner tube is arranged in the combustion tube and fitted into the first inner tube. The second inner tube includes a closed opening located toward the injection port. A connection wall is connected to an inner surface of the combustion tube and an outer surface of the first inner tube. The connection wall closes a gap between the combustion tube and the first inner tube. The partition wall is annular and connected to the inner surface of the combustion tube and an outer surface of the second inner tube. An ignition portion is located closer to the injection port than the partition wall to ignite the air-fuel mixture.

The burner of the present disclosure divides the interior of the combustion tube into a mixing chamber and a combustion chamber with the partition wall and a second tube having a closed opening located at the side of the injection port.

### BRIEF DESCRIPTION OF THE DRAWINGS

Fig. 1 is a schematic diagram of a diesel engine including a first embodiment of burner according to the technology of the present disclosure.
Fig. 2 is a schematic cross-sectional view showing the structure of the burner in the first embodiment.
Fig. 3 is a front view showing the structure of a partition wall for the burner of Fig. 2.
Fig. 4 is a functional block diagram showing the electrical structure of a controller for the burner of Fig. 2.
Fig. 5 is a flowchart showing the procedures of a regeneration process in the first embodiment.
Fig. 6 is a schematic cross-sectional diagram showing a burner in a second embodiment.
Fig. 7 is a front view showing a partition wall for the burner of Fig. 6.
Fig. 8 is a front view of a partition wall in a modified example.

### EMBODIMENTS OF THE INVENTION

### First Embodiment

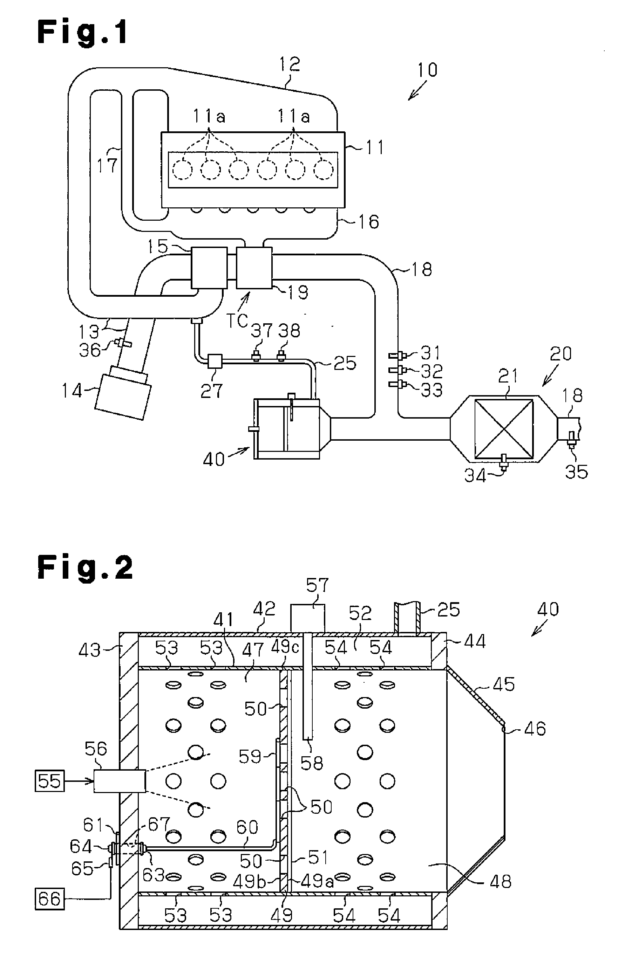

A first embodiment of a burner will now be described with reference to Figs. 1 to 5. The entire structure of a diesel engine including the burner will first be described. Here, a passage for air, which is drawn into the diesel engine, and a passage for exhaust gas, which is discharged from the diesel engine, will mainly be described.

As shown in Fig. 1, a diesel engine 10 is provided with a cylinder block 11 including six in-line cylinders 11a. Each cylinder 11a is connected to an intake manifold 12, which supplies each cylinder 11a with intake air, and an exhaust manifold 16, into which the exhaust gas from each cylinder 11a flows.

An air cleaner 14 is coupled to an upstream end of an intake pipe 13, which is a passage for the intake air and which is coupled to the intake manifold 12. A compressor 15 of a turbo charger TC is arranged in the intake pipe 13.

An EGR pipe 17 and an exhaust pipe 18 are connected to the exhaust manifold 16. The exhaust pipe 18 is an element constituting an exhaust gas passage. When the intake pipe 13 and the exhaust manifold 16 are connected, exhaust gas flows into the intake pipe 13 through the EGR pipe 17. A turbine 19, which is coupled with the compressor 15, is connected to the upstream side of the exhaust pipe 18.

An exhaust gas purifying device 20, which purifies the exhaust gas, is arranged at the downstream side of the exhaust pipe 18. The exhaust gas purifying device 20 includes a diesel particulate filter 21 (hereafter, referred to as the DPF 21) that captures particulate matter in the exhaust gas. The DPF 21 has a honeycomb structure formed from, for example, porous silicon carbide and captures particulate matter in the exhaust gas, with the inner wall surfaces of columnar bodies of the honeycomb structure. A burner 40 is arranged upstream of the DPF 21 to perform a regeneration process on the DPF 21 by heating the exhaust gas flowing into the DPF 21.

An air supplying pipe 25, which supplies the burner 40 with air, is connected to the intake pipe 13 at the downstream side of the compressor 15. An air valve 27 is arranged in the air supplying pipe 25. When the air valve 27 is open, the burner 40 is supplied with some of the intake air in the intake pipe 13 as combustion air.

Various types of sensors are fixed to the engine 10 to obtain information related to the operation conditions of the engine 10. For example, an upstream exhaust gas flow rate sensor 31, an upstream exhaust gas pressure sensor 32, and an upstream exhaust gas temperature sensor 33 are fixed to the exhaust pipe 18 at the upstream side of the DPF 21. The upstream exhaust gas flow rate sensor 31 detects the upstream exhaust gas flow rate Qep1, which is the mass flow rate of the exhaust gas flowing through the upstream side of the DPF 21. The upstream exhaust gas pressure sensor 32 detects the upstream exhaust gas pressure Pep1, which is the pressure of the exhaust gas flowing through the upstream side of the DPF 21. The upstream exhaust gas temperature sensor 33 detects the upstream exhaust pressure temperature Tep1, which is the temperature of the exhaust gas flowing through the upstream side of the DPF 21.

A DPF temperature sensor 34 is fixed to the DPF 21 to detect the DPF temperature Td, which is the temperature of the DPF 21. A downstream exhaust gas pressure sensor 35 is fixed to the exhaust pipe 18 at the downstream side of the DPF 21 to detect the downstream exhaust gas pressure Pep2, which is the pressure of the exhaust gas having passed through the exhaust gas purifying device 20.

An intake air amount sensor 36 is fixed to the intake pipe 13 at the upstream side of the compressor 15 to detect the intake air amount Qa, which is the mass flow rate of the intake air flowing through the intake pipe 13. An air flow rate sensor 37, which detects the air flow rate Qad that is the mass flow rate of the combustion air flowing through the air supplying pipe 25, and an air temperature sensor 38, which detects the air temperature Tad that is the temperature of the air for fuel flowing through the air supplying passage, are fixed to the air supplying pipe 25 at the downstream side of the air valve 27.

The structure of the burner 40 will now be described in further detail with reference to Fig. 2.

As shown in Fig. 2, the burner 40 has a double-tube structure including a cylindrical first tube 41 (hereafter, simply referred to as the tube 41) and a second tube 42 (hereafter, simply referred to as the tube 42), which has a larger inner diameter than the tube 41. The basal ends of the tubes 41 and 42 are fixed to a base plate 43, which closes the basal ends that are open. An annular closing plate 44 is fixed to the distal ends of the tubes 41 and 42 to close the gap between the tubes 41 and 42. A generally annular injection plate 45 is coupled to the closing plate 44, and an injection port 46 extends through the central portion of the injection plate 45.

A partition wall 49 is coupled to the tube 41 to partition the interior of the tube 41 into a premixing chamber 47 and a combustion chamber 48. The partition wall 49 is a perforated circular plate, and the outer rim 49c of the partition wall 49 is joined with the inner circumferential surface of the tube 41. Communication passages 50, which communicate the premixing chamber 47 with the combustion chamber 48, extend through the partition wall 49 in the thicknesswise direction of the partition wall 49. The partition wall 49 includes a metal mesh 51, which covers the opening of the each communication passage 50, on the surface 49a facing the combustion chamber 48. The mesh 51 limits backfiring from the combustion chamber 48 to the premixing chamber 47.

The air supplying pipe 25 is connected to the outer circumferential surface of the tube 42 at a position located toward the distal end from the partition wall 49. The combustion air from the air supplying pipe 25 enters an air intake chamber 52, which is the gap between the tube 41 and the tube 42. First intake holes 53 are formed at the circumferential wall of the tube 41 entirely in the circumferential direction of the tube 41 at positions located toward the basal end from the partition wall 49. The first intake holes 53 extend through the circumferential wall of the tube 41 to communicate the air intake chamber 52 with the premixing chamber 47. Second intake holes 54 are formed at the circumferential wall of the tube 41 entirely in the circumferential direction of the tube 41 at positions located toward the distal end from the partition wall 49. The second intake holes 54 extend through the circumferential wall of the tube 41 to communicate the air intake chamber 52 with the combustion chamber 48. Thus, when the air valve 27 is open, some of the intake air flowing through the intake pipe 13 is supplied to the premixing chamber 47 through the air supplying pipe 25, the air intake chamber 52, and the first intake holes 53, and some of the intake air is supplied to the combustion chamber 48 through the air supplying pipe 25, the air intake chamber 52, and the second intake holes 54.

A fuel supplying unit 55 delivers fuel to an injection nozzle 56, which is fixed to the central portion of the base plate 43. The injection port of the injection nozzle 56 is arranged in the premixing chamber 47. The fuel supplying unit 55 includes a fuel pipe, a fuel valve, and a heater (not shown). The fuel supplying unit 55 vaporizes the fuel, which flows when the fuel valve opens, with the heater and delivers the vaporized fuel to the injection nozzle 56. The fuel delivered to the injection nozzle 56 is injected into the premixing chamber 47 from an injection port of the injection nozzle 56. In the premixing chamber 47, the fuel injected from the injection nozzle 56 is mixed with the combustion air drawn through the first intake holes 53 to generate an air-fuel mixture.

An ignition portion 58 of an ignition plug 57 is arranged in the combustion chamber 48 at a position located toward the partition wall 49 from the location where the second intake holes 54 are formed. The air-fuel mixture flows through the communication passage 50 of the partition wall 49 into the combustion chamber 48, and the ignition portion 58 ignites the air-fuel mixture. This produces a flame that burns the air-fuel mixture in the combustion chamber 48 and generates combustion gas, which is the burned air-fuel mixture. The generated combustion gas flows into the exhaust pipe 18 through the injection port 46.

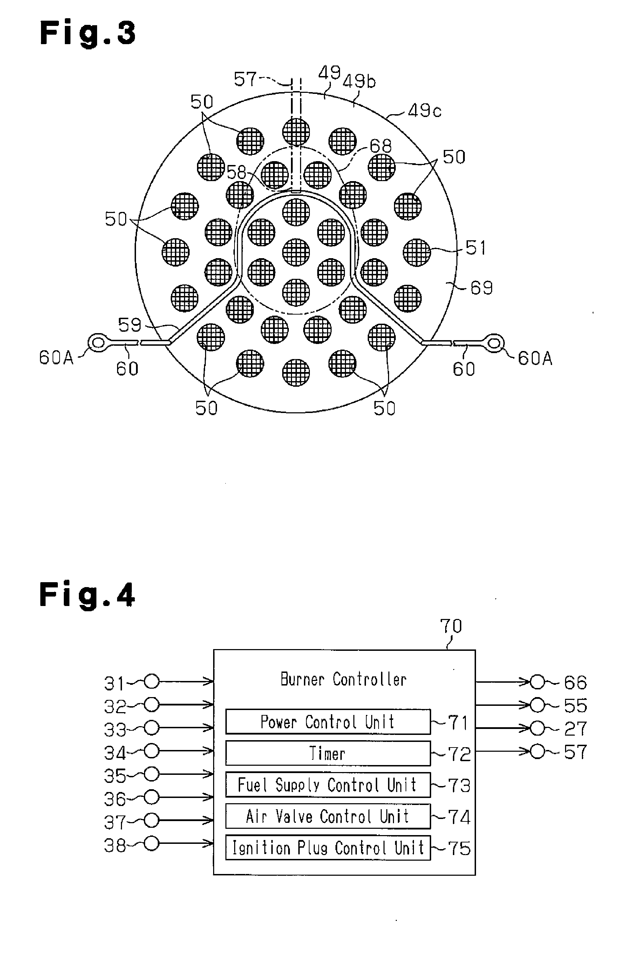

A heating unit 59 is fixed to the partition wall 49 on a surface 49b facing away from the injection port 46 by a fastener (not shown). The heating unit 59 is a wire resistance heating element that is electrically insulated from the partition wall 49 and usable at a temperature that can burn the particulate matter in the exhaust gas, for example, at a temperature higher than approximately 600°C. The heating unit 59 includes two ends, each connected to a basal end of an electric wire 60 that supplies power to the heating unit 59 (refer to Fig. 3). The electric wires 60, which are electrically insulated from the tube 41 and the base plate 43 by a coating material, extend toward the base plate 43 in the premixing chamber 47.

A terminal base 61 is fixed to the base plate 43. The terminal base 61 is inserted into a wire passage 67, which extends through the base plate 43. Aseal (not shown) seals the gap between the terminal base 61 and the wire passage 67. The terminal base 61 includes an interior terminal 63, which is arranged inside the premixing chamber 47, and an exterior terminal 64, which is arranged outside the premixing chamber 47. The interior terminal 63 of the terminal base 61 is connected to a connection terminal 60A arranged on the distal end of the electric wire 60, and the exterior terminal 64 of the terminal base 61 is connected to an electric wire 65, which is further connected to a power supply device 66. The terminal base 61 and the electric wire 65 are provided for each of the electric wires 60 connected to the two ends of the heating unit 59.

Fig. 3 is a front view showing the structure of the partition wall 49 in the first embodiment from the premixing chamber 47. In Fig. 3, the ignition plug 57 and the ignition portion 58, which are indicated by the double-dashed lines in Fig. 3, show where the ignition plug 57 and the ignition portion 58 are located as viewed from the front of the partition wall 49.

As shown in Fig. 3, the heating unit 59 is attached to the surface 49b to be symmetric at the left and right sides of an axis extending in the vertical direction when viewing the surface 49b facing the premixing chamber 47 from the front. Further, the heating unit 59 is attached to the surface 49b avoiding the opening of the communication passages 50. A region 68 in the partition wall 49 surrounded by the double-dashed lines defines a first portion located closer to the ignition portion 58 than the outer rim 49c of the partition wall 49 as viewed from the front of the partition wall 49. In the partition wall 49, a region 69 between the outer rim 49c of the partition wall 49 and the double-dashed lines defines a second portion located closer to the outer rim of the partition wall 49 than the ignition portion 58 as viewed from the front of the partition wall 49.

The two ends of the heating unit 59 are located proximal to the outer rim 49c of the partition wall 49. One end of the heating unit 59 is located at the left lower side of the partition wall 49 in the region 69, and the other end of the heating unit 59 is located at the right lower side of the partition wall 49 in the region 69. The heating unit 59 extends from the two ends toward the center of the partition wall 49. Further, the heating unit 59 is laid out in the region 68 so as to detour the center of the partition wall 49 and pass by a location overlapping the ignition portion 58 in the axial direction of the tube 41 (as viewed from the front of the partition wall 49).

The electric structure of the burner 40 will now be described with reference to Fig. 4.

A burner controller 70 (hereafter, simply referred to as the controller 70) controls the supply of fuel from the fuel supplying unit 55, the ignition of the ignition plug 57, the opening and closing of the air valve 27, and the supply of power from the power supply device 66 to the heating unit 59 in the burner 40. The controller 70 includes a CPU, a ROM, which stores various types of control programs and various types of data, and a RAM, which temporarily stores computation results of various types of computations and various types of data. The controller 70 executes various types of processes based on the control programs stored in the ROM. Here, a regeneration process will be described; a regeneration process which burns the particulate matter captured by the DPF 21 by heating the exhaust gas with the burner 40.

Referring to Fig. 4, the controller 70 receives, in predetermined control cycles, a detection signal indicating the upstream exhaust gas flow rate Qep1 from the upstream exhaust gas flow rate sensor 31, a detection signal indicating the upstream exhaust gas pressure Pep1 from the upstream exhaust gas pressure sensor 32, and a detection signal indicating an upstream exhaust gas temperature Tep1 from the upstream exhaust gas temperature sensor 33. Further, the controller 70 receives, in predetermined control cycles, a detection signal indicating the DPF temperature Td from the DPF temperature sensor 34, a detection signal indicating the downstream exhaust gas pressure Pep2 from the downstream exhaust gas pressure sensor 35, and a detection signal indicating an intake air amount Qa from the intake air amount sensor 36. Moreover, the controller 70 receives, in predetermined cycles, a detection signal indicating the air flow rate Qad from the air flow rate sensor 37 and a detection signal indicating the air temperature Tad from the air temperature sensor 38.

The controller 70 calculates the deposited amount M of particulate matter on the DPF 21 based on the pressure difference ΔP of the upstream exhaust gas pressure Pep1 and the downstream exhaust gas pressure Pep2, and the upstream exhaust gas flow rate Qep1. The controller 70 starts the regeneration process of the DPF 21 under the condition that the deposited amount M becomes greater than a preset threshold α.

The controller 70 ends the regeneration process when the deposited amount M of the particulate matter calculated during the regeneration process becomes less than a preset threshold β (<α), which allows for determination that the particulate matter deposited on the DPF 21 has been sufficiently burned.

The controller 70 includes a power control unit 71 that outputs a start signal to the power supply device 66 to start the supply of power to the heating unit 59. The power supply device 66 that receives the start signal supplies the heating unit 59 with predetermined power. When the deposited amount M of the particulate matter calculated during the regeneration process becomes less than the threshold β, the power control unit 71 outputs an end signal to the power supply device 66 to end the supply of power to the heating unit 59. The power supply device 66 ends the supply of power to the heating unit 59 in response to the end signal.

The controller 70 includes a timer 72 that starts measuring the time when the start signal is output and resets the measurement value when the end signal is output. When the measurement C of the timer 72 exceeds a predetermined completion valve Cf, the controller 70 starts driving the fuel supplying unit 55, the air valve 27, and the ignition plug 57. The completion value Cf is a value at which it may be assumed that the burning of the particulate matter deposited on the partition wall 49 and the mesh 51 has been completed.

The controller 70 includes a fuel supply control unit 73 that calculates the fuel injection amount Qf per unit time injected into the combustion chamber 48 from the fuel supplying unit 55 based on the upstream exhaust gas flow rate Qep1, the upstream exhaust gas temperature Tep1, the air flow rate Qad, the air temperature Tad, the DPF temperature Td, and the target temperature of the DPF 21. The fuel injection amount Qf is the fuel amount needed to heat the exhaust gas flowing through the DPF 21 to heat the DPF 21 to the target temperature. The fuel supply control unit 73 outputs a control signal to the fuel supplying unit 55 so that the injection nozzle 56 injects the calculated fuel injection amount Qf. The fuel supplying unit 55, which has received the control signal, drives a fuel injection valve and a heater in accordance with the control signal to inject fuel from the injection nozzle 56.

The controller 70 includes an air valve control unit 74 that calculates an air supplying amount Qs that is the air amount corresponding to the fuel injection amount Qf. The air amount corresponding to the fuel injection amount Qf is the air amount per unit time needed to burn the fuel corresponding to the fuel injection amount Qf. The air valve control unit 74 outputs an open valve signal to the air valve 27. The open valve signal is a control signal indicating the open degree of the air valve 27 needed to supply the burner 40 with air in correspondence with the intake air amount Qs, based on the intake air amount Qa, the air flow rate Qad, and the air temperature Tad. The air valve 27, which has received the open valve signal, is controlled at an open angle corresponding to the open valve signal.

Further, if the deposited amount M of the particulate matter calculated when the regeneration process is performed becomes less than the threshold β, the air valve control unit 74 outputs a close valve signal, which is a control signal that closes the air valve 27. This blocks the flow of the intake air in the air supplying pipe 25 from the intake pipe 13.

The controller 70 includes an ignition plug control unit 75 that provides the ignition plug 57 with a control signal that drives the ignition plug 57. The ignition plug 57, which has received the control signal, generates a spark in the proximity of the ignition portion 58.

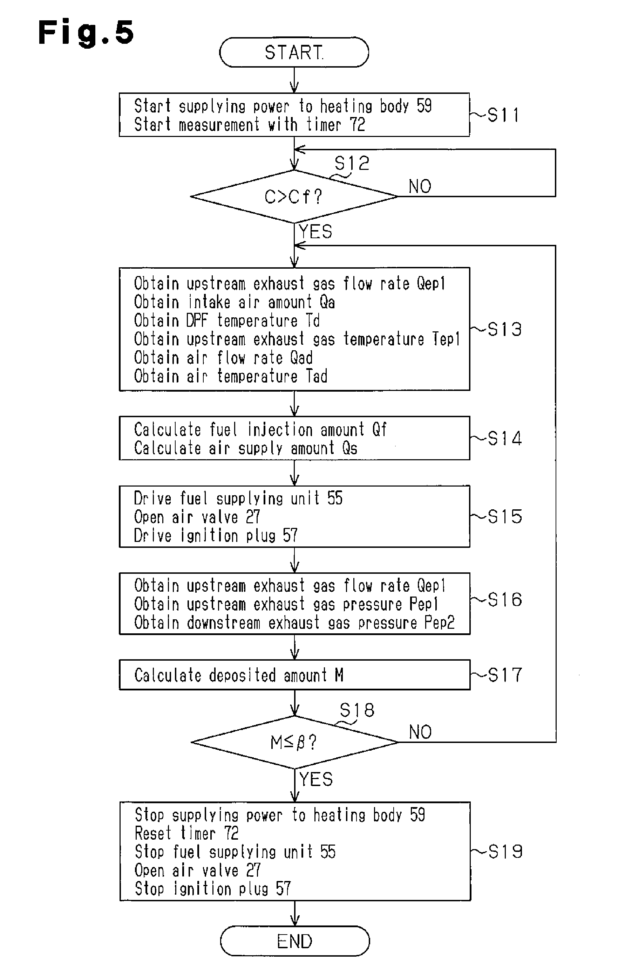

The procedures for processing a regeneration process will now be described with reference to Fig. 5. As described above, the controller 70 starts the regeneration process under the condition that the deposited amount M is greater than the threshold α.

Referring to Fig. 5, in step S11, the controller 70 starts the regeneration process under the condition that the deposited amount M is greater than the threshold α.

As shown in Fig. 5, in step S11, the controller 70 starts heating the partition wall 49 by outputting a start signal to the power supply device 66 and supplying power to the heating unit 59. Further, the controller 70 starts measuring the time with the timer 72. In following step S12, the controller 70 repeatedly determines whether or not the measurement C of the timer 72 has exceeded the completion value Cf.

When the measurement C of the timer 72 has exceeded the completion value Cf (step S12: YES), that is, when assumed that the particulate matter deposited on the partition wall 49 and the mesh 51 has been burned, the controller 70 proceeds to following step S13.

In step S13, the controller 70 obtains, from the sensors, the upstream exhaust gas flow rate Qep1, the upstream exhaust gas temperature Tep1, the air flow rate Qad, the air temperature Tad, the intake air amount Qa, and the DPF temperature Td. In following step S14, the controller 70 calculates fuel injection amount Qf and the air supply amount Qs corresponding to the fuel injection amount Qf.

In following step S15, the controller 70 outputs a control signal to the fuel supplying unit 55 to drive the fuel supplying unit 55 and inject the amount of fuel corresponding to the fuel injection amount Qf into the premixing chamber 47. Further, based on the intake air amount Qa and the air supply amount Qs, the controller 70 outputs a control signal to the air valve 27 and drives the air valve 27 to draw the amount of combustion air corresponding to the air supply amount Qs into the air intake chamber 52. The controller 70 also outputs a control signal to the ignition plug 57 to drive the ignition plug 57.

This ignites the air-fuel mixture, which is generated by the premixing chamber 47, in the combustion chamber 48 with the ignition plug 57. The combustion gas generated in the combustion chamber 48 is mixed with the exhaust gas flowing through the exhaust pipe 18 to heat the exhaust gas that flows to the DPF 21. The heated exhaust gas flows into the DPF 21 and burns the particulate matter deposited on the DPF 21.

In following step S16, the controller 70 newly obtains the upstream exhaust gas pressure Pep1 from the upstream exhaust gas pressure sensor 32, the downstream exhaust gas pressure Pep2 from the downstream exhaust gas pressure sensor 35, and the upstream exhaust gas flow rate Qep1 from the upstream exhaust gas flow rate sensor 31.

In following step S17, the controller 70 computes the pressure difference ΔP of the upstream exhaust gas pressure Pep1 and the downstream exhaust gas pressure Pep2 and calculates the deposited amount M for the DPF 21 based on the pressure difference ΔP and the upstream exhaust gas flow rate Qep1. Then, in following step S18, the controller 70 determines whether or not the deposited amount M is less than or equal to the threshold β.

When the deposited amount M exceeds the threshold β (step S18: NO), the controller 70 repeats the processing of step S13 to step S18.

When the deposited amount M is less than or equal to the threshold β (step S18: YES), in following step S19, the controller 70 outputs an end signal to the power supply device 66 to stop the supply of power to the heating unit 59. Further, the controller 70 resets the measurement C of the timer 72. The controller 70 also outputs an end signal to the fuel supplying unit 55, a close valve signal to the air valve 27, and a suspension signal to the ignition plug 57. The controller 70 then ends the regeneration process.

The operation of the burner 40 will now be described.

In the burner 40, the heating unit 59 heats the partition wall 49 and the mesh 51 to temperatures at which particulate matter can be burned to burn the particulate matter deposited on the partition wall 49 and the mesh 51. This opens the communication passages 50 that were at least partially closed by particulate matter. Thus, the air-fuel mixture that flows into the combustion chamber 48 from the premixing chamber 47 is evenly distributed and the flow rate of the air-fuel mixture is also lowered. As a result, the air-fuel mixture is supplied with a high probability to the vicinity of the ignition portion 58, and the occurrence of misfires caused by the flow rate of the air-fuel mixture is lowered. This makes it harder for the particulate matter deposited on the partition wall 49 to have an influence on the air-fuel mixture, and limits degradation in the ignitability of the air-fuel mixture.

Further, as shown in Fig. 3, the heating unit 59 is in contact with the region 68, which is the first portion, and the region 69, which is the second portion, and passes by a location overlapped with the ignition portion 58 in the axial direction of the tube 41 (when viewing the partition wall 49 from the front). Thus, for example, in comparison to when the heating unit 59 is in contact with only the region 69, in the partition wall 49, the temperature of the region 68 that is proximal to the ignition portion 58 is quickly heated. As a result, the particulate matter deposited near the ignition portion 58 is easily burned. This supplies air-fuel mixture to the proximity of the ignition portion 58 with a high probability. Thus, degradation in the ignitability of the air-fuel mixture is efficiently limited.

The heating unit 59 is in contact with both of the region 68, which is the first portion, and the region 69, which is the second portion. Thus, in comparison to when the heating unit 59 is in contact with only the region 68 or only the region 69, the temperature is increased entirely and quickly in the partition wall 49. As a result, particulate matter is burned entirely on the partition wall 49. This further limits decreases in the ignitability of the air-fuel mixture.

The heating unit 59 is attached to the partition wall 49 on the surface 49b at the side of the premixing chamber 47. Thus, in comparison to when the heating unit 59 is attached to the surface 49a at the side of the combustion chamber 48, it is less important for the heating unit 59 to have a high heat resistance, and it is less important for the electric wires 60 to have a high heat resistance. The electric wires 60 are joined with the heating unit 59. Further, in comparison with when the heating unit 59 is incorporated in the partition wall 49, it is not so hard to manufacture the partition wall 49.

The heating unit 59 performs heating immediately before the ignition by the ignition portion 58. In other words, the ignition portion 58 performs an ignition when the temperature of the partition wall 49 is raised by the heating unit 59. As a result, in comparison to when the ignition by the ignition portion 58 is performed before the temperature of the partition wall 49 is increased, the ignition portion 58 performs an ignition when the deposited amount of the particulate matter is small on the partition wall 49 and the mesh 51. Further, the air-fuel mixture passing through the communication passages 50 is heated with the partition wall 49. This improves the ignitability of the air-fuel mixture.

Further, the heating unit 59 continues to heat the partition wall 49 until the deposited amount M of particulate matter on the DPF 21 becomes less than or equal to the threshold β. That is, the partition wall 49 is maintained at a temperature that can burn the particulate matter after the ignition by the ignition portion 58 and during a period in which the air-fuel mixture is burned in the combustion chamber 48. Thus, the air-fuel mixture flowing into the combustion chamber 48 is heated with the partition wall 49 when passing through the communication passages 50. As a result, in addition to the ignitability of the air-fuel mixture, the combustion properties of the air fuel mixture are improved.

As described above, the burner 40 of the first embodiment has the advantages described below.
(1) The particulate matter deposited on the partition wall 49 and the mesh 51 is burned. This lowers the influence which the particulate matter captured by the partition wall 49 has on the ignition of the air-fuel mixture, and improves the ignitability of the air-fuel mixture.
(2) The heating unit 59 is in contact with the region 68, which is the first portion. Thus, the heating unit 59 directly heats the region 68, and the particulate matter deposited at a location proximal to the ignition portion 58 is easily burned. This efficiently limits degradation in the ignitability of the air-fuel mixture.
(3) The heating unit 59 is arranged in the region 68 and the region 69, which is the second portion. Thus, the temperature is increased entirely and quickly in the partition wall 49. As a result, in comparison to when only one of the region 68 and the region 69 is directly heated, degradation in the ignitability of the air-fuel mixture is further limited.
(4) The heating unit 59 is attached to the surface 49b at the side of the premixing chamber 47. Thus, it is less important for the heating unit 59 and the electric wires 60 joined with the heating unit 59 to have a high heat resistance. Further, it is not so hard to manufacture the partition wall 49.
(5) The heating unit 59 performs heating immediately before ignition by the ignition portion 58. This ignites the air-fuel mixture when the deposited amount of particulate matter is small on the partition wall 49 and the mesh 51, and heats the air-fuel mixture passing through the communication passages 50 with the partition wall 49. As a result, the ignitability of the air-fuel mixture are improved.
(6) The heating unit 59 continues to heat the partition wall 49 until the deposited amount M of the particulate matter on the DPF 21 becomes less than or equal to the threshold β. As a result, the ignitability of the air-fuel mixture are improved and the combustion properties of the air-fuel mixture are improved in comparison to when the heating unit 59 suspends heating before an ignition by the ignition portion 58, that is, before the air-fuel mixture is burned in the combustion chamber 48.

### Second Embodiment

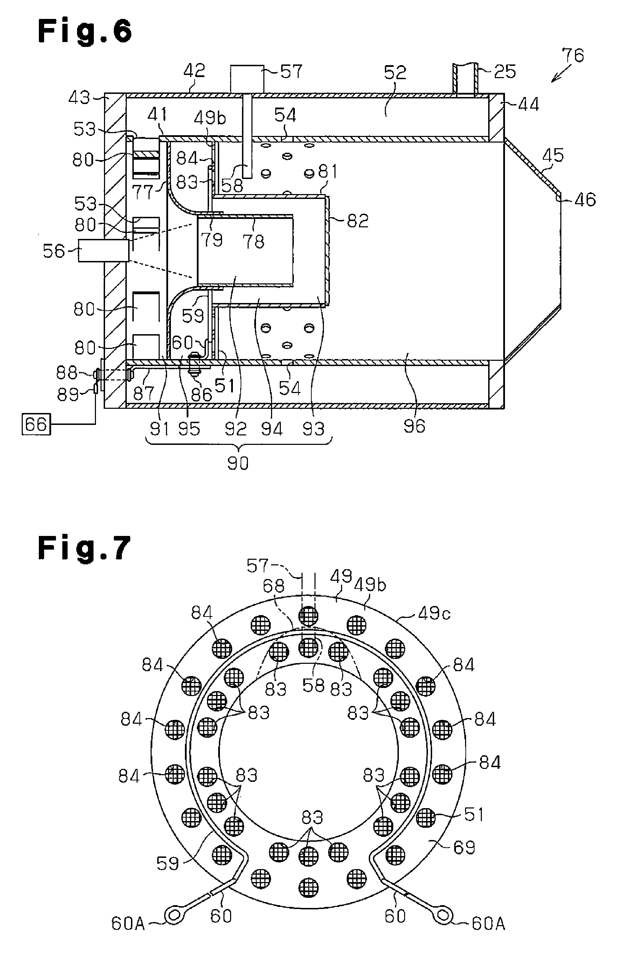

A second embodiment of a burner will now be described with reference to Figs. 6 and 7. A burner 76 of the second embodiment differs from the burner 40 of the first embodiment in the structure of the premixing chamber. Portions differing from the first embodiment will be described in detail for the second embodiment, and portions functioning in the same manner as the first embodiment are given the same reference numbers and will not be described in detail.

As shown in Fig. 6, in the burner 76, the first tube 41 corresponds to a combustion tube in the claims. An annular connection wall 77, as viewed from above in the axial direction of the tube 41, connects a cylindrical third tube 78 (hereafter, simply referred to as the tube 78) to the inner circumferential surface of the tube 41. The tube 78 corresponds to a first inner tube in the claims. The rim of the connection wall 77 is fixed to the tube 41 at a position located toward the base plate 43, and the connection wall 77 closes the gap between the inner circumferential surface of the tube 41 and the outer circumferential surface of the tube 78. The tube 78 is connected to the connection wall 77 when fitted into an inner fitting portion 79 of the connection wall 77. Further, the tube 78 has an open end located toward the injection port 46.

In the tube 41, at a portion closer to the base plate 43 than the portion connecting the tube 41 and the connection wall 77, first intake holes 53 are formed at predetermined intervals in the circumferential direction. The first intake holes 53 draw combustion air from the air intake chamber 52 into a first mixing chamber 91 (hereafter, simply referred to as the mixing chamber 91), which is the area surrounded by the base plate 43, the tube 41, and the connection wall 77. The first intake holes 53 are formed by cutting and bending portions of the circumferential wall of the tube 41 toward the inner side. The tube 41 includes bent pieces 80 formed by the cut and bent portions. The bent pieces 80 guide the combustion air so that the air flowing into the mixing chamber 91 from the air intake chamber 52 swirls in the mixing chamber 91.

The tube 78 includes a second mixing chamber 92, which is an area surrounded by the circumferential wall of the tube 78. A portion of the tube 78 is fitted into a cylindrical fourth tube 81 (hereafter, simply referred to as the tube 81). The tube 81 corresponds to a second inner tube in the claims. The tube 81 projects toward the injection port 46 from the tube 78. A closing plate 82 closes the open end of the projecting portion (distal end of tube 81). The end of the tube 81 at the side opposite to the injection port 46 (basal end of tube 81) is located closer to the injection port 46 than the portion connecting the tube 41 and the connection wall 77. An annular partition wall 49 fixes the basal end to the tube 41.

The partition wall 49 of the second embodiment includes an inner rim entirely connected to the outer circumferential surface of the tube 81. The outer rim of the partition wall 49 is entirely connected to the inner circumferential surface of the tube 41. The partition wall 49 includes communication passages 83, which are arranged along a circle having a small diameter, and communication passages 84, which are arranged along a circle having a large diameter. Thus, the centers of the openings of the communication passages 83 and 84 are arranged along concentric circles having different diameters (refer to Fig. 7).

A third mixing chamber 93 (hereafter, simply referred to as the mixing chamber 93) is located toward the injection port 46 from the tube 78. The mixing chamber 93 is an area surrounded by the tube 81 and the closing plate 82 and in communication with the mixing chamber 92. The gap between the tube 78 and the tube 81 defines a fourth mixing chamber 94 (hereafter, simply referred to as the mixing chamber 94), which is in communication with the mixing chamber 93. The area surrounded by the tube 41, the partition wall 49, and the connection wall 77 at the side of the mixing chamber 94 facing away from the injection port 46 defines a fifth mixing chamber 95 (hereafter, simply referred to as the mixing chamber 95), which is in communication with the mixing chamber 94.

Accordingly, in the burner 76, the mixing chambers 91, 92, 93, 94, and 95 form a premixing chamber 90. The gap between the tube 41 and the tube 81 and the area surrounded by the tube 41 located toward the injection port 46 from the closing plate 82 defines a combustion chamber 96. The premixing chamber 90 is divided from the combustion chamber 96 with the partition wall 49.

A heating unit 59 is fixed to the partition wall 49 on the surface 49b facing away from the injection port 46 by a fastener (not shown). The heating unit 59 includes two ends, each connected to a basal end of an electric wire 60 that supplies power to the heating unit 59. The electric wires 60 are electrically insulated from the tube 41 by a coating material. A connection terminal 60A, which is arranged on the distal end of each of the electric wires 60, is connected to an interior terminal of a terminal base 86, which is coupled to the circumferential wall of the tube 41. The terminal base 86 includes an exterior terminal that is located in the air intake chamber 52 and connected to an electric wire 87. The electric wire 87 is electrically insulated from the tube 41 and the base plate 43 by a coating material.

The electric wires 87 each extend through the air intake chamber 52 toward the base plate 43 and connect to an interior terminal of a terminal base 88 fixed to the base plate 43. The exterior terminal of the terminal base 88 is connected to an electric wire 89, and the electric wire 89 is connected to the power supply device 66. Each of the electric wires 60 joined with the two ends of the heating unit 59 is provided with the terminal bases 86 and 88 and the electric wires 87 and 89.

Fig. 7 is a front view showing the structure of the partition wall 49 in the second embodiment as viewed from the mixing chamber 95. As shown in Fig. 7, the heating unit 59 is attached to the surface 49b to be symmetric at the left and right sides of an axis extending in the vertical direction when viewing the surface 49b from the mixing chamber 95. The two ends of the heating unit 59 are located at positions proximal to the outer rim 49c of the partition wall 49. The heating unit 59 extends from the two ends toward the center of the partition wall 49 and then between the communication passages 83 and the communication passages 84 in the circumferential direction of the partition wall 49. The heating unit 59 passes by a location overlapped with the ignition portion 58 as viewed from the front of the partition wall 49 in the region 68.

As described above, the burner 76 of the second embodiment has the same advantages as the burner 40 of the first embodiment.

The burners of the first and second embodiments may be modified as described below.

The heating by the heating unit 59 may be suspended at any timing as long as the measurement C of the timer 72 has reached the completion value Cf. For example, the heating may be suspended at the point of time the measurement C of the timer 72 reaches the completion value Cf or at the point of time the measurement C of the timer 72 reaches a predetermined measurement value that is greater than the completion value Cf.

The heating by the heating unit 59 does not have to be performed immediately before an ignition by the ignition portion 58 and may be performed cyclically regardless of the timing at which the ignition portion 58 performs an ignition. Even in such a structure, compared to a burner in which the heating unit 59 does not perform heating, the probability is increased in that the ignition portion 58 performs an ignition when the deposited amount of particulate matter on the partition wall 49 is small.

The heating unit 59 may be attached to the surface 49a of the partition wall 49 and arranged in the combustion chamber. Alternatively, the heating unit 59 may be incorporated in the partition wall 49 or be spaced apart from the partition wall 49. It is only necessary that the heating unit be located at a position where it can heat the partition wall 49.

The heating unit 59 may be attached to the partition wall 49 with the mesh 51 located between the heating unit 59 and the partition wall 49. Such a structure heats the mesh 51 more easily than the partition wall 49 and thus quickly burns the particulate matter deposited on the mesh 51.

The mesh 51 may be omitted from the burners 40 and 76.

The heating unit 59 may be in contact with the first portion and the second portion, only the first portion, or only the second portion. Further, the temperature of the first portion may be the same as the temperature of the second portion. Alternatively, the temperature of the first portion may be higher than the temperature of the second portion or the temperature of the first portion may be lower than the temperature of the second portion. It is only required that the partition wall 49 be heated.

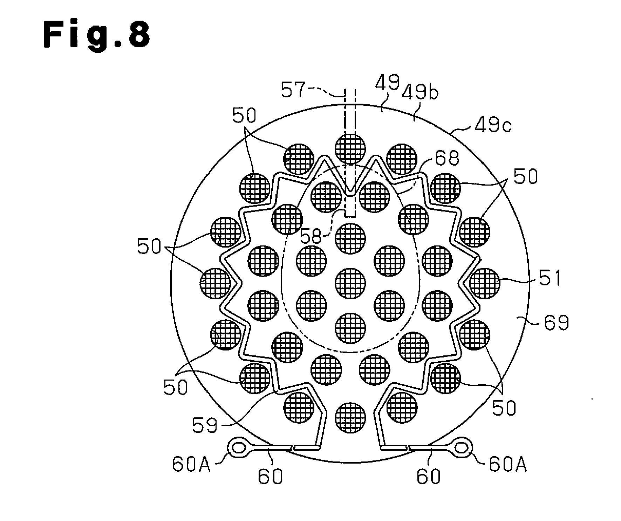

For example, as shown in Fig. 8, when viewing the surface 49b facing the premixing chamber 47 from the front, the heating unit 59 may have a star-shaped polygonal shape extending along the entire circumference of the partition wall 49 and, in the vicinity of the ignition portion 58, be overlapped with the ignition portion 58 as viewed from the front of the partition wall 49. In such a structure, when the heating unit 59 performs heating, portions having a low temperature and portions having a high temperature are not locally formed in an easy manner. Thus, the partition wall 49 is heated while limiting variations in the temperature distribution. It is preferable that the heating unit 59 be shaped to be symmetric at the left and right sides of an axis extending in the vertical direction to heat the partition wall 49 while limiting variations in the temperature distribution.

A structure in which the heating unit 59 heats the partition wall 49 so that the temperature of the first portion is higher than the temperature of the second portion especially limits changes in the condition of the air-fuel mixture caused by deposits on the partition wall 49 at a portion relatively close to the ignition portion 58. This efficiently limits degradation in the ignitability of the air-fuel mixture.

A plurality of heating units 59 may be attached to the partition wall 49. For example, a heating unit 59 may be attached on each of the surface 49a and the surface 49b of the partition wall 49. Alternatively, a plurality of heating units 59 may be attached to the surface 49b of the partition wall 49.

The heating unit is not limited to a linear heating element and may be a planar heating element as long as it may be attached to a partition wall without overlapping openings of communication passages. Further, a heating body only needs to be a heating element that may be used at a temperature that can burn the particulate matter in the exhaust gas, for example, 600°C. The heating body is not limited to a metal heating element like a resistance heating element and may be, for example, a non-metal heating element such as a silicon carbide heating element.

The wires for supplying power to the heating unit may be changed in accordance with the design conditions.

The burner controller 70 may be formed by a single electronic control unit or a plurality of electronic control units.

In addition to the regeneration process of the DPF 21, the heating by the burners 40 and 76 may be applied to, for example, a catalyst heating process that heats a catalyst of an exhaust gas purifying device.

The engines to which the burners 40 and 76 are applied may be gasoline engines. In addition to engines, the burners 40 and 76 may be applied to, for example, heating appliances.

### Description of Reference Characters

10: diesel engine, 11: cylinder block, 11a: cylinder, 12: intake manifold, 13: intake pipe, 14: air cleaner, 15: compressor, 16: exhaust manifold, 17: EGR pipe, 18: exhaust pipe, 19: turbine, 20: exhaust gas purifying device, 21: diesel particulate filter, 25: air supply pipe, 27: air valve, 31: upstream exhaust gas flow rate sensor, 32: upstream exhaust gas pressure sensor, 33: upstream exhaust gas temperature sensor, 34: DPF temperature sensor, 35: downstream exhaust gas pressure sensor, 36: intake air amount sensor, 37: air flow rate sensor, 38: air temperature sensor, 40: burner, 41: first tube, 42: second tube, 43: base plate, 44: closing plate, 45: injection plate, 46: injection port, 47: premixing chamber, 48: combustion chamber, 49: partition wall, 49a and 49b: surface, 49c: outer rim, 50: communication passage, 51: mesh, 52: air intake chamber, 53: first intake hole, 54: second intake hole, 55: fuel supplying unit, 56: injection nozzle, 57: ignition plug, 58: ignition portion, 59: heating unit, 60: electric wire, 60A: connection terminal, 61: terminal base, 63: interior terminal, 64: exterior terminal, 65; electric wire, 66: power supply device, 67: wire passage, 68 and 69: region, 70: burner controller, 71: power control unit, 72: timer, 73: fuel supply control unit, 74: air valve control unit, 75: ignition plug control unit, 76: burner, 77: connection wall, 78: third tube, 79: inner fitting portion, 80: bent piece, 81: fourth tube, 82: closing plate, 83: communication passage, 84: communication passage, 86: terminal base, 87: electric wire, 88: terminal base, 89: electric wire, 90: premixing chamber, 91: first mixing chamber, 92: second mixing chamber, 93: third mixing chamber, 94: fourth mixing chamber, 95: fifth mixing chamber, 96: combustion chamber.

## Claims

1. A burner comprising:
a mixing chamber that generates an air-fuel mixture;
a combustion chamber that burns the air-fuel mixture;
a partition wall that partitions the combustion chamber from the mixing chamber;
a plurality of communication passages formed by the partition wall to communicate the mixing chamber with the combustion chamber; and
a heating unit that heats the partition wall.

2. The burner according to claim 1, further comprising an ignition portion that ignites the air-fuel mixture in the combustion chamber, wherein
at least one of the communication passages is formed by the partition wall at a portion located closer to the ignition portion than an outer rim of the partition wall as viewed from the front, and
the heating unit includes a heating element that contacts the portion located closer to the ignition portion.

3. The burner according to claim 1, further comprising an ignition portion that ignites the air-fuel mixture in the combustion chamber, wherein
the partition wall includes, as viewed from the front, a first portion, which is located closer to the ignition portion than an outer rim of the partition wall, and a second portion, which is located closer to the outer rim of the partition wall than the ignition portion;
the first portion includes at least one of the communication passages; and
the heating unit is configured to increase the first portion to a higher temperature than the second portion.

4. The burner according to claim 1, further comprising an ignition portion that ignites the air-fuel mixture in the combustion chamber, wherein
the partition wall includes, as viewed from the front, a first portion, which is located closer to the ignition portion than an outer rim of the partition wall, and a second portion, which is located closer to the outer rim of the partition wall than the ignition portion;
each of the first portion and the second portion includes at least one of the communication passages; and
the heating unit includes a heating element that contacts the first portion and the second portion.

5. The burner according to any one of claims 1 to 4, wherein the heating unit is attached in the mixing chamber.

6. The burner according to any one of claims 1 to 5, further comprising a controller that controls burning of the air-fuel mixture and driving of the heating unit,
wherein the controller is configured to start burning the air-fuel mixture when the heating unit heats and increases the temperature of the partition wall.

7. The burner according to claim 6, wherein the controller is configured to also perform heating with heating unit while the air-fuel mixture is being burned in the combustion chamber.

8. The burner according to any one of claims 1 to 7, comprising:
a combustion tube including a distal end defining an injection port that injects combustion gas, which is the burned air-fuel mixture;
a first inner tube extending through the combustion tube toward the injection port, wherein the air-fuel mixture flows into the first inner tube from a side opposite to the injection port;
a second inner tube arranged in the combustion tube and fitted into the first inner tube, wherein the second inner tube includes a closed opening located toward the injection port;
a connection wall connected to an inner surface of the combustion tube and an outer surface of the first inner tube, wherein the connection wall closes a gap between the combustion tube and the first inner tube;
the partition wall that is annular and connected to the inner surface of the combustion tube and an outer surface of the second inner tube; and
an ignition portion located closer to the injection port than the partition wall to ignite the air-fuel mixture.
